# EUROPEAN PATENT SPECIFICATION

(11) **EP 1 398 979 B1**
(45) Date of publication and mention of the grant of the patent: **28.02.2007**
(21) Application number: 02405780.4
(22) Date of filing: 09.09.2002
(51) Int. Cl.: H04Q 7/24, H04Q 7/32

(54) **Method for integrated communications in a telecommunications network, switching center, integrated communication terminal and telecommunications network**
Verfahren zur integrierten Kommunikation in einem mobilen Telekommunikationsnetz, Vermittlungszentrum, integriertes Endgerät und Telekommunikationsnetz
Méthode pour des communications intégrés dans un réseau de télécommunications, un centre de relais, un terminal de communication intégré et un réseau de télécommunications

(43) Date of publication of application: 17.03.2004
(73) Proprietor: BMD Wireless AG, 6300 Zug (CH)
(72) Inventor: Woog, Marc A., 8185 Winkel (CH)
(74) Representative: Rutz, Peter

(56) References cited:
- GB-A- 2 371 717
- US-A- 5 826 191
- US-A1- 2001 003 706
- FLUEGEL H ET AL: "EINSATZGEBIETE VON DECT-NETZEN IM ZUSAMMENSPIEL MIT DUAL-MODE GERAETEN" ITG-FACHBERICHTE, VDE VERLAG, BERLIN, DE, 4 June 1997 (1997-06-04), pages 45-54, XP000770965 ISSN: 0932-6022

## Description

The present invention relates to a method for integrated communications in a telecommunications network; a Mobile Services Switching Center, an integrated communication terminal and a telecommunications network according to claim 1, claim 10, claim 13 and claim 15.

The present invention relates in particular to a method applied in a telecommunications network that combines a Mobile Telecommunications Network and at least one wired network such as an IP-network, e.g. the INTERNET, and/or a Public Switched Telephone Network PSTN/ISDN; and possibly a further wireless network such as a cordless network.

### BACKGROUND OF THE INVENTION

Calls between subscribers, a calling party and a called party may nowadays be performed in various ways. A call may be set up between terminals of a Mobile Telecommunications Network; for example as specified in the GSM (Global System for Mobile Communications) standards, the TDMA standards, the CDMA standards, the 3G standards (3GPP) using the Signalling System No. 7, IS-41 or IS-95 protocol standards. A call may be set between terminals of traditional public switched telephone network PSTN such as the ISDN (Integrated Services Digital network) or between terminals connected to a network operating according to the TCP/IP internetworking protocols and voice over IP protocols that provide Signalling, Database Services, Call Connect/Disconnect (Bearer Control) and CODEC operates as in required in an ISDN network.

An introduction to the GSM system can be found in [1], Lajos Hanzo, THE COMMUNICATIONS HANDBOOK, CRC PRESS, Boca Raton 1997, Chapter 87, pages 1226 ff. Below references are also given to [2], B. Walke, Mobilfunknetze und ihre Protokolle, Band 1, B.G. Teubner Verlag, Stuttgart 2000.

A description of traditional public switched telephone networks PSTN and Voice over IP networks can be found in [3], Sean Christensen, Voice over IP solutions, Part Number 200011-002 06-01, Juniper Networks, Sunnyvale 2001.

Explanations of TCP/IP internetworking protocols are provided in [1], pages 702 - 704 and [4], Douglas E. Comer, INTERNETWORKING with TCP/IP, PRINCIPLES, PROTOCOLS, AND ARCHITECTURES, 4^{th} EDITION, Prentice Hall 2000, pages 183-195.

Of course, calls may also be routed through different wired or wireless, connection oriented or connectionless packet switching or circuit switched networks.

A communication system that connects a first Public Switched Telephone Network PSTN via an IP network to a second Public Switched Telephone Network PSTN is disclosed in [5], US Patent Application No. 2001/0028642 A1.

An IP telephony gateway-solution for telecom switches of wired circuit switched networks PSTN/ISDN or Mobile Telecommunications Networks is disclosed in [6], U.S. Patent Application 2002/0093945.

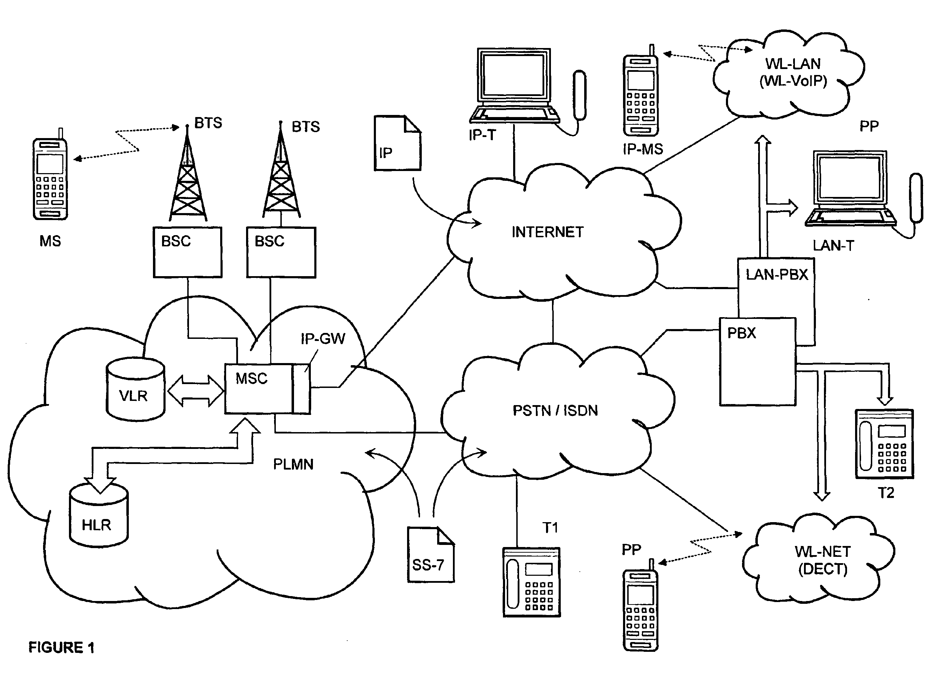

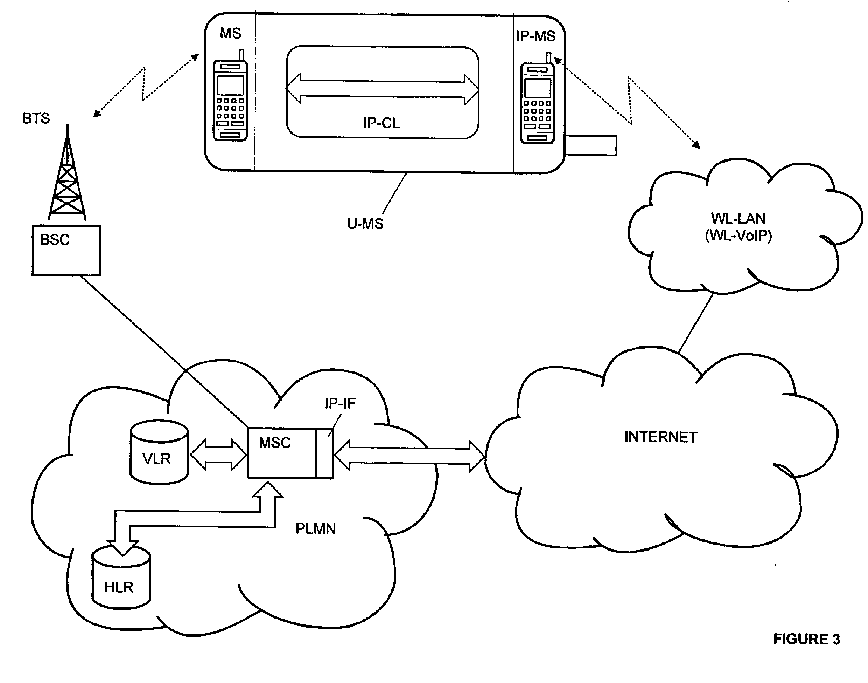

A communication system that, for example by means of the solution disclosed in [6], connects a Mobile Telecommunications Network, via public wired networks (PSTN/ISDN/INTERNET) to a Private Wireless Network is shown in [7], WO 00/28752, Figure 1. The Public and Private Wireless Networks of this communication system operate with the same public wireless protocol, such as GSM, and the Private Wireless Network additionally operates with a wired packet protocol, such as IP (see also [2], page 305, figure 3.75).

Hence, this communication system permits a user to operate freely in both Public and Private Wireless Networks using a standard Mobile Station MS, which within the Public Wireless Network connects to Public Base Transceiver Stations BTS and within the Private Wireless Network connects to Private Base Transceiver Stations BTS. The use of a single Mobile Station MS in Public and Private Wireless Networks brings enhanced mobility to a subscriber.

However, at his home or in the office a subscriber normally prefers the use of more comfortable communication terminals. Besides mobility the subscriber often prefers comfort and functionalities that are not provided by a Mobile Station MS, which further requires frequent reloading of its energy storage devices. In order to receive calls, that are directed to the Mobile Station MS, on a second communication terminal e.g. on a comfort telephone, in his office, a subscriber may use a Call Forwarding Service provided by the operator of the Mobile Telecommunications Network PLMN. Such a Call Forwarding Service is defined in [8], Digital cellular telecommunications system (Phase 2); Call Forwarding (CF) supplementary services - Stage 1 (GSM 02.82), ETSI European Telecommunication Standard ETS 300 515 (2^{nd} Edition, May 1996).

According to this part of the GSM-Standard, Call Forwarding may be performed

### a) unconditional

This service permits a called mobile subscriber to have the network send all incoming calls, or just those associated with a specific basic service group, addressed to the called mobile subscriber's directory number to another directory number. If this service is activated, calls are forwarded no matter what the condition of the termination is.

### b) on Mobile Subscriber Not Reachable

This service permits a called mobile subscriber to have the network send all incoming calls, or just those associated with a specific Basic service group, addressed to the called mobile subscriber's directory number, but which is not reachable, to another directory number. The ability of the served mobile subscriber to originate calls is principally unaffected, but practically it is affected if the mobile subscriber is de-registered, if there is radio congestion or if the mobile subscriber for example is being out of radio coverage. If this service is activated, a call is forwarded only if the mobile subscriber is not reachable.
If the called subscriber is not reachable, either because the Mobile Subscriber Identity (IMSI) Detached Flag is set or because the called subscriber is not allowed to roam into the current location area, the Visitor Location Register VLR will check if the "Call Forwarding on MS Not Reachable" - service is active. If the Call Forwarding service is not active the user error is set to "Absent Subscriber" and this is returned to the Mobile Services Switching Center MSC in the MAP_SEND_INFO_FOR_INCOMING_CALL service response and further to the Home Location Register HLR (see [9], ETSI European Telecommunication Standard ETS 300 599 (December 2000), page 349, figure 16.1.3/1 and pages 454 and 476).

Further Call Forwarding options, Call Forwarding on Subscriber busy and Call Forwarding on No Reply, are not relevant in the context of the present invention.

In the first of the above discussed cases (Call Forwarding Unconditional) the ability of the served mobile subscriber to originate calls with his Mobile Station is unaffected. However, since the subscriber has decided to use the second communication terminal, this will not be required. Calls originated from the second communication terminal will be handled according to an agreement with a service provider that differs from the agreement with the operator of the Mobile Telecommunications Network PLMN, thus doubling the administrative overhead on the side of the subscriber and on the side of the network operators. In addition, with the call forwarding option not all services are supported.

This restriction of services and the requirement of a separate agreement for the second communication terminal also apply for the second case (Call Forwarding on MS Not Reachable). In this case the Mobile Station MS will normally be registered as inactive. Information requests sent to the Home Location Register HLR will be answered with MS inactive without providing further user-data.

The subscriber's second communication terminal is therefore not integrated into the Mobile Telecommunications Network PLMN so that a peer to peer handover from the Mobile Station MS to the second communication terminal, which receives the forwarded call, will not be reached. Hence, not all services will be available for incoming and outgoing calls handled with the second communication terminal.

[12], H. Flügel, et. al., Einsatzgebiete von DECT-Netzen im Zusammenspiel mit Dual-Mode Geräten, ITG-Fachberichte, VDE Verlag, Berlin, June 4, 1997, pages 45-54, discloses a method for communication in a telecommunications network, which combines a Mobile Telecommunications Network (PLMN) and a DECT-network with a subscriber's Dual Mode Mobile Terminal that is capable of operating in the Mobile Telecommunications Network (PLMN) and in a DECT-network. According to [12], the communication between the Dual Mode Mobile Terminal and the GSM-System is performed via the DECT-Base Station. Further, in this architecture, an IN-Server (Intelligent Network Server) with a Service Control Point SCP and with a Service Switching Point SSP is required, that communicates with the Dual Mode Mobile Terminal, which must be equipped with modules supporting CTM-(Cordless Telecommunication Mobility) technology. Accordingly, as outlined in [12], page 53 the DECT-Base Stations must be connected to the GSM-Mobile Services Switching Center MSC, which involves disadvantageous, such as increased costs for the terminals and higher installation and maintenance efforts in the network.

[13], WO 97 /42785 discloses a process for integrating cordless telephone networks into cellular mobile phone networks by using dual-system terminals which support communication over both a cordless telephone network and a mobile phone network. In the process, the mobile phone network assigns each cordless telephone network usable by a specific subscriber an own Location Area, to which a subscriber specific call number is allocated. A continuous check is made whether the subscriber is in the Location Area of the cordless telephone network available to him, and if so, then any call incoming via the mobile phone network is completed optionally or automatically by a mobile phone switching center using the call number assigned to the Location Area. Hence, the system disclosed in [13] requires the implementation of location update procedures and call number assignment to the visited Location Areas, which involves considerable efforts and is undesirable.

The present invention is therefore based on the object of providing an improved method for integrated communications in a telecommunications network with a first communication terminal or communication module of a subscriber; a Mobile Station MS designed to operate in a Mobile Telecommunications Network PLMN, and with a second communication terminal or module of said subscriber, designed to operate in another network.

It is a further object of the invention to provide a method that allows peer to peer handover of services from said Mobile Station MS to said second communication terminal.

Still further it is an object of the invention to provide a method that allows centralised and unified administration of the subscriber's Mobile Station MS and the second communication terminal, thus reducing administrative efforts of service providers.

It is another object of the invention to provide a method that allows using the same calling number MSISDN for the first and the second communication terminal.

Further it is an object of the invention to provide a communication terminal integrating said modules operating in the Mobile Telecommunications Network PLMN or another network.

Still further it is an object of the invention to provide a method for performing automated handovers between the first communication terminal or communication module of the subscriber and the second communication terminal or module of said subscriber in such a way that always the preferred communication terminal or module is automatically selected whenever it can be attached to the related network.

### SUMMARY OF THE INVENTION

The above and other objects of the present invention are achieved by a method, a Mobile Services Switching Center and a telecommunications network according to claim 1, claim 10, claim 13 and claim 15.

The inventive method allows integrated communications in a telecommunications network, which combines a Mobile Telecommunications Network PLMN, for example as specified in the GSM (Global System for Mobile Communications) standards, the TDMA standards, the CDMA standards, the 3G standards (3GPP) as well as in the Signalling System No. 7, IS-41 and IS-95 protocol standards, and at least another network not using said standards; for example a wired packet switching or circuit switched network PSTN/ISDN, INTERNET; with a Mobile Station MS of a subscriber designed to operate in the Mobile Telecommunications Network PLMN and a second communication terminal of the subscriber designed to operate in the other or one of the other networks PSTN/ISDN, INTERNET and with an extended Mobile Services Switching Center MSCX that over a gateway connects to the packet switching network INTERNET.

According to the present invention, when the Mobile Station MS is detached from the Mobile Telecommunications Network PLMN, the second communication terminal is registered at the Mobile Telecommunications Network PLMN in such a way that a request for routing information for the setup of a connection to the subscriber's Mobile Station MS, sent to the related Home Location Register HLR will be answered with the address of the extended Mobile Services Switching Center MSCX to which the second communication terminal is attached.

The present invention enables the subscriber therefore to attach to the Mobile Telecommunications Network PLMN with the Mobile Station MS when high mobility is required or the second communication terminal when enhanced comfort or further functionalities are required.

Hence, the second communication terminal can be handled within the Mobile Telecommunications Network PLMN in the same way as the Mobile Station MS is, thus allowing peer to peer handover between the Mobile Station MS and the second communication terminal as well as unified administration of the subscriber's Mobile Station MS and the second communication terminal. Virtually the second communication terminal connects over the radio interface to the extended Mobile Services Switching Center MSCX, which in reality is however replaced by a wired interface connecting to the Internet and in a preferred embodiment to the circuit switched network PSTN/ISDN as well. The Mobile Telecommunications Network PLMN handles therefore both communication terminals, the Mobile Station MS and the second communication terminal, as a single unit with only one calling number MSISDN.

Data, required to establish connections for incoming and/or outgoing calls between the extended Mobile Services Switching Center MSCX and the second communication terminal are stored in a local database that corresponds to a Visitor Location Register VLR of the Mobile Telecommunications Network PLMN. Said data could therefore also be stored in the Visitor Location Register VLR, which is assigned to the extended Mobile Services Switching Center MSCX.

The subscriber uses a local control module, preferably an IP-based application or IP-client that is installed in a host located at home or in the office in order to forward a registration request over the packet switching network, preferably the Internet, to the extended Mobile Services Switching Center MSCX which uses a centralised control module in order to process the received request and to attach or detach the second communication terminal.

The local control module further allows performing automated handovers between the first communication terminal or communication module of the subscriber and the second communication terminal or module of said subscriber in such a way that always the preferred communication terminal or module is automatically selected whenever it can be attached to the related network.

Since the Mobile Station MS and the second communication terminal use the same identity, only one of them can be fully active in the Mobile Telecommunications Network PLMN. The Mobile Station MS is preferably switched off in order to get detached from the Mobile Telecommunications Network PLMN so that during the time, when the second communication terminal is used, the discharging process of the batteries of the Mobile Station MS is decelerated and the emission of electromagnetic waves is avoided.

The second communication terminal is preferably connected to the Internet since the extended Mobile Services Switching Center MSCX already comprises an Internet gateway. However the second communication terminal may also be connected directly or via the Internet to a circuit switched network PSTN/ISDN.

Further, the second communication terminal may be a simple IP-or ISDN telephone or a video terminal equipped with audio devices. Still further, a second communication terminal may be provided that is designed to operate according to the standards of the Mobile Telecommunications Network PLMN and according to the standards of another wireless network, such as the standards of a wireless Local Area Network LAN, which provides a larger bandwidth (see [1], chapter 96, pages 1367-1379) or the Digital European Cordless Telephone (DECT) standard (see [1], chapter 92, pages 1305-1325).

In a preferred embodiment the Mobile Station MS and the second communication terminal are designed as modules that are integrated in a single communication terminal preferably comprising said local control module that allows automated handover, so that, whenever possible, the preferred module, normally the module corresponding to the second communications terminal, is attached to the Mobile Telecommunications Network PLMN.

Despite of the numerous advantages of the invention a standard Mobile Services Switching Center MSCX can be enhanced with little effort since the control commands exchanged with further network entities of the Mobile Telecommunications Network PLMN are standardised.

The centralised control module implemented within an IP-Interface allows user logins, authentication checks as well as performance of registration procedures in order to attach the second communication terminal preferably in an analogous way as the Mobile Station MS is connected via the radio interface to a Mobile Services Switching Center MSC.

Functionality of a Mobile Telecommunications Network PLMN comprising inventive Mobile Services Switching Centers MSCX is therefore significantly enhanced. With the present invention the operator of the Mobile Telecommunications Network PLMN may provide full coverage for all communication requirements of the subscriber.

### BRIEF DESCRIPTION OF THE DRAWINGS

Some of the objects and advantages of the present invention have been stated, others will appear when the following description is considered together with the accompanying drawings, in which:
- Figure 1: shows a known telecommunications network which combines different wired and wireless, packet switching and circuit switched networks,
- Figure 2: shows a telecommunications network of figure 1 with an inventive Mobile Services Switching Center MSC,
- Figure 3: an integrated communications terminal U-MS comprising modules corresponding to a Mobile Station MS and a second communications terminal IP-MS and an application that allows to attach or detach said modules automatically to the Mobile Telecommunications Network PLMN,
- Figure 4: shows transactions performed in the telecommunication network shown in figure 1, 2 or 3, and
- Figure 5: shows transactions performed in the telecommunication network shown in figures 2 or 3.

### DETAILED DESCRIPTION OF THE PREFERRED EMBODIMENTS

Figure 1 shows a known telecommunications network with a Mobile Telecommunications Network PLMN comprising a Mobile Services Switching Center MSC that is connected to a Public Switched Telephone Network PSTN/ISDN and via a gateway module IP-GW to a public packet switching network such as the Internet. The telecommunications network further comprises Private Branch Exchanges PBX, a Private Branch Exchange LAN-PBX connected to the Internet that serves a Local Area Network and a conventional Private Branch Exchange PBX connected to the Public Switched Telephone Network PSTN/ISDN. Still further, the telecommunications network comprises a wireless local area network WL-LAN that connects to the Internet and preferably uses the IP protocols and a wireless network that connects to the Public Switched Telephone Network PSTN/ISDN and uses for example the DECT standard.

The Mobile Telecommunications Network PLMN includes two types of network databases, a Home Location Register HLR and a Visitor Location Register VLR. A Mobile Telecommunications Network PLMN will normally include at least one Home Location Register HLR and several Visitor Location Registers VLR, usually one Visitor Location Register VLR for every Mobile Services Switching Center MSC. Among other things, each Home Location Register HLR has stored therein all permanent or semi-permanent data for the subscribers, i.e. those Mobile Stations MS that belong to this particular Home Location Register HLR. The telephone number MSISDN and the International Mobile Subscriber Identity IMSI of the Mobile Stations MS and information concerning additional services, which are included in the subscription, are examples of such data. The active status of additional services and information, which discloses in which Visitor Location Register VLR a respective Mobile Station MS is registered at that particular moment, are also stored in the Home Location Register HLR. Among other temporary information, information is stored in each Visitor Location Register VLR about Mobile Stations MS that are currently located in a serving area of a related Mobile Services Switching Center MSC, but whose Home Location Register HLR is located elsewhere. Each Visitor Location Register VLR also contains a copy of the subset of all subscriber data that is contained in the Home Location Register HLR and that is relevant to this Visitor Location Register VLR. This subset is obtained from the Home Location Register HLR in conjunction with a Mobile Station MS entering the area covered by a Visitor Location Register VLR or the Mobile Services Switching Center MSC respectively, whereupon data is signalled from the Home Location Register HLR to the Visitor Location Register VLR by means of procedures provided by the Signalling System No. 7. The Home Location Register HLR therefore handles SS7-transactions with both Mobile Switching Centers MSC and Visitor Location Registers VLR, which either request information from the Home Location Register HLR or update the information contained within the Home Location Register HLR. The Home Location Register HLR also initiates transactions with Visitor Location Registers VLR to complete incoming calls and to update subscriber data. A method for updating one or more Home Location Registers HLR included in a Mobile Telecommunications Network PLMN is described in [10], U.S. Patent 5,490,201, which is herein incorporated by reference in its entirety (see also [1], page 1122, figure 80.3).

The technology required to interconnect the different networks is well known. An advanced IP-gateway solution, designed to connect telecom switches, i.e. Mobile Services Switching Centers MSC of the Mobile Telecommunications Network PLMN and Exchanges of the Public Switched Telephone Network PSTN/ISDN (see [1], pages 577-582), to the Internet, is disclosed in [7].

As shown in Figure 1, a subscriber may therefore use an IP-terminal IP-T; IP-MS directly connected to the Internet or a corresponding wireless Local Area Network WL-LAN, a LAN terminal LAN-T, a standard telephone terminal T1, T2 connected to the Public Switched Telephone Network PSTN/ISDN or a Private Branch Exchange PBX, a cordless terminal PP operating for example according to the DECT (Digital European Cordless Telephone) standard (see [1], pages 1305-1307) or a mobile station MS attached to the Mobile Telecommunications Network PLMN.

Compared to the wired or cordless terminals the Mobile Station MS provides higher mobility and is therefore the preferred communication terminal for a majority of users. However, wired terminals have other advantages, in particular a larger display and extended comfort functionalities so that a subscriber will use the Mobile Station MS when mobility is required and the wired terminal when comfort functionalities are preferred. E.g., the subscriber may use a wired IP-telephone at home or in the office in order to reduce communication costs and a Mobile Station MS when commuting between home and office.

Therefore, in order to obtain the desired mobility the subscriber has to arrange for the routing of calls, for example by means of the Call Forwarding Service of the Mobile Telecommunications Network PLMN which, as described above, does not result in a peer to peer handover from the Mobile Station MS to the second communication terminal in view of the supported services or the administrative handling of the terminals.

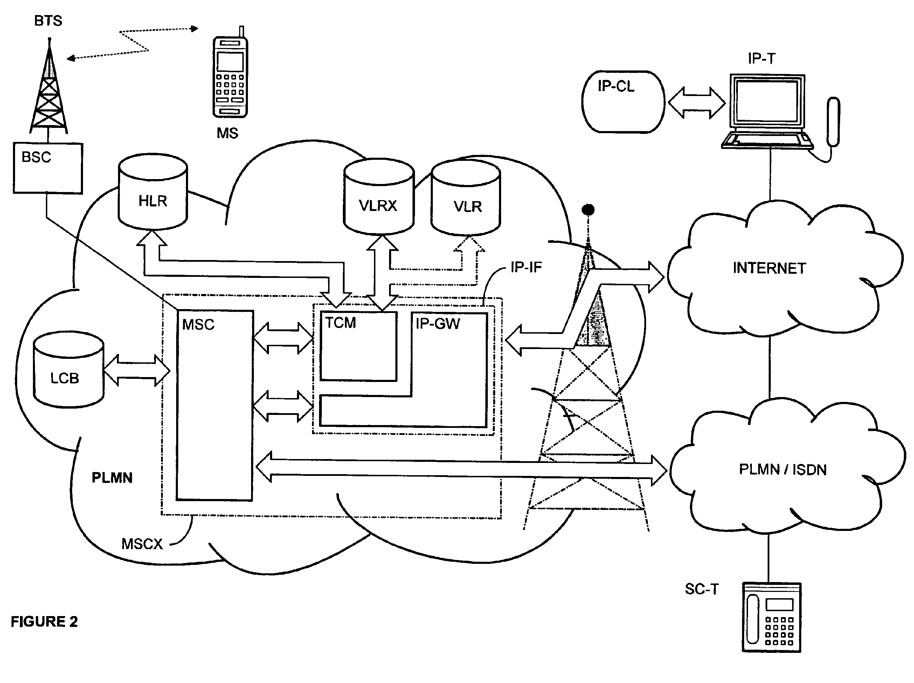

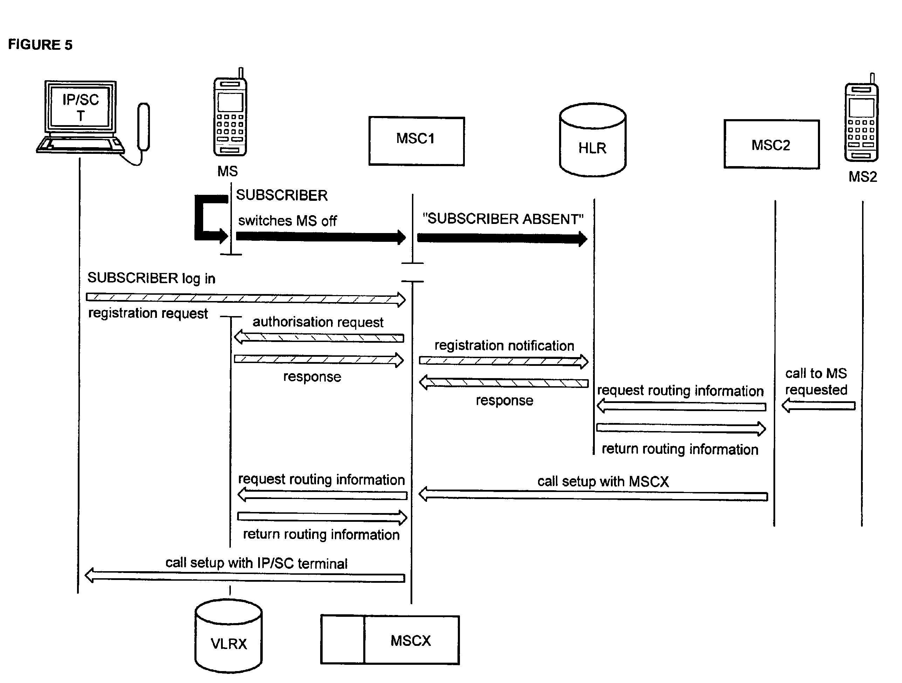

The inventive method, extended Mobile Services Switching Center MSCX and telecommunication network, which solve the described problems and provide further advantages are described below with reference to figures 2 and figure 5.

Figure 2 shows the telecommunication network of Figure 1 equipped with an extended Mobile Services Switching Center MSCX, with an interface IP-IF that comprises said gateway module IP-GW and a centralised control module TCM that provides services, which will be explained below. Further shown are communication terminals that belong to a single user, a Mobile Station MS and an IP-terminal IP-T; IP-MS (see figure 3), which is called below the second communication terminal. In a preferred embodiment of the invention the subscriber may use a standard ISDN terminal SC-T as the second communication terminal.

According to the present invention, when the Mobile Station MS is detached from the Mobile Telecommunications Network PLMN, the second communication terminal IP-T; IP-MS is registered at the Mobile Telecommunications Network PLMN in such a way that a request for the routing information, sent to the related Home Location Register HLR will be answered with the address of the extended Mobile Services Switching Center MSCX to which the second communication terminal IP-T; IP-MS is attached. The subscriber may therefore use either the Mobile Station MS or the second communication terminal IP-T; IP-MS that is a wired or wireless terminal.

In a preferred embodiment of the invention, instead of physically independent terminals MS; IP-MS, an integrated communication terminal U-MS, as shown in figure 3, is provided, which incorporates modules that correspond to the Mobile Station MS and to the second communication terminal IP-MS. The integrated communication terminal U-MS acts therefore as a dual-mode terminal, which provides a higher data transfer rate when connected to a related wireless network WL-LAN that may be set-up in the subscriber's office or in public places that are visited by the subscriber.

Further enclosed in the integrated communication terminal U-MS is a local control module IP-CL, preferably an IP-based application or IP-client that allows to automatically attach or detach said modules, so that whenever possible and without interaction by the subscriber, always the preferred module is activated. This solution is in so-called communicators, e.g. the Nokia communicator 9210, advantageously applicable. As soon as the subscriber enters his office or said public places the communicator, i.e. the integrated communication terminal U-MS, will attach via the wireless network WL-LAN to the Mobile Telecommunications Network PLMN.

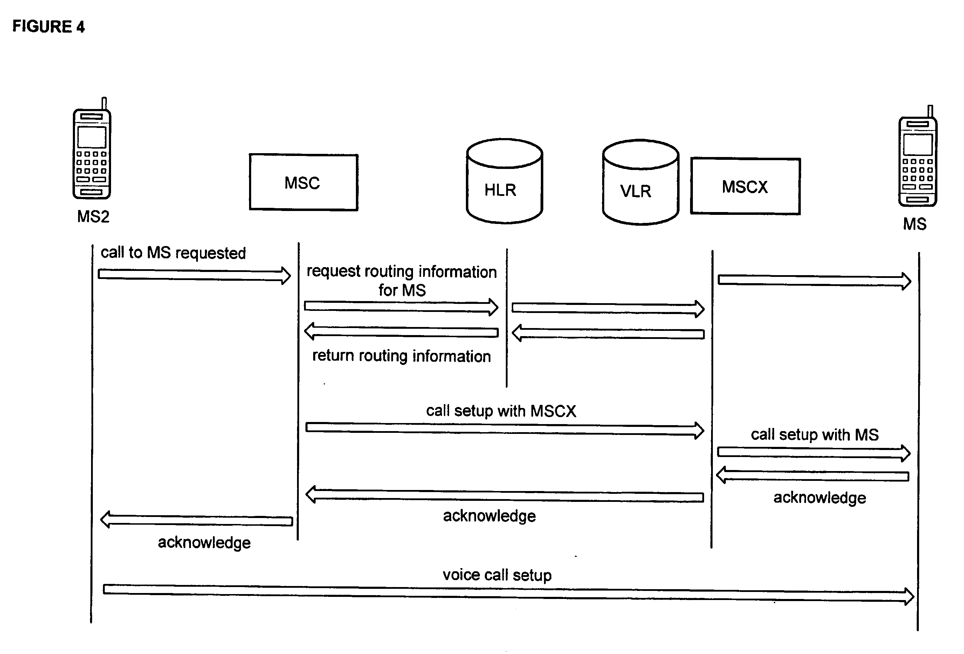

Figure 4 shows basic transactions for the call setup procedure used when the subscriber's Mobile Station MS is attached to the Mobile Telecommunications Network PLMN. Procedures for call delivery according to the ETSI, IS-41 and IS-95 protocol are as follows. A call origination is detected and the called party number MSISDN is received by the serving Mobile Services Switching Center MSC, which determines the associated Home Location Register HLR serving the called Mobile Station MS and sends a location request. The Home Location Register HLR determines the serving Visitor Location Register VLR, which forwards the call to the Mobile Services Switching Center MSC currently serving the called Mobile Station MS. Assuming that the terminal is idle, the serving Mobile Services Switching Center MSC allocates a temporary identifier, called a Temporary Local Directory Number (TLDN), to the served Mobile Station MS and returns a response containing this information via the Home Location Register HLR to the originating Mobile Services Switching Center MSC, which will subsequently request call setup to the serving Mobile Services Switching Center MSC via the SS-7 signalling network using the usual call setup protocols (see [1], page 1123, figure 80.4).

When the subscriber decides to use the second terminal IP-T; IP-MS he will detach the Mobile Station MS from the Mobile Telecommunications Network PLMN, e.g. by switching it off.

On receipt of a corresponding Location Update request (DETACH IMSI) over the radio interface, indicating that the Mobile Station shall be detached from the Mobile Telecommunications Network PLMN, a procedure performed in the Mobile Services Switching Center MSC invokes a detach service (MAP_DETACH_IMSI) in order to inform the Visitor Location Register VLR that the subscriber is no longer reachable (see [9], ETSI European Telecommunication Standard ETS 300 599 (December 2000), page 349, figure 16.1.3/1) . This information is used by the Visitor Location Register VLR to reject mobile terminating calls or short messages without sending page messages on the radio path. The service is unconfirmed as it is likely that the Mobile Station MS is switched off before receiving a confirmation. If the called subscriber is no longer reachable, a routing information request from the Home Location Register HLR will be answered with the error message "Absent Subscriber".

After the Mobile Station MS has been detached from the Mobile Telecommunications Network PLMN as shown in figure 5, the subscriber uses the local control module IP-CL installed in a local host, preferably in the second communication terminal IP-T; IP-MS itself, to log in at the centralised control module TCM installed in the interface IP-IF of the extended Mobile Services Switching Center MSCX in order to request the registration of the second communication terminal IP-T; IP-MS.

The centralised control module TCM, which acts as a server to plurality of such local control modules IP-CL or IP-clients, will send an authentication request to a local register VLRX preferably to the Visitor Location Register VLR to authenticate the second communication terminal IP-T; IP-MS. If the second communication terminal IP-T; IP-MS had been correctly registered in the local register VLRX or the Visitor Location Register VLR. Assuming that the second communication terminal IP-T; IP-MS is correctly authenticated, the centralised control module TCM sends a registration notification to the Home Location Register HLR, which in turn confirms registration of the second communication terminal IP-T; IP-MS at the extended Mobile Services Switching Center MSCX. For the described registration process the centralised control module TCM preferably uses the services that are already available at the extended Mobile Services Switching Center MSCX and its Visitor Location Register VLR, which are preferably capable to serve Mobile Stations MS as well. However it would also be possible to create a dedicated Mobile Services Switching Center MSCX that serves only said second communication terminals and not Mobile Stations MS . In this case the dedicated Mobile Services Switching Center MSCX would not require a radio interface.

After completion of the registration procedures the registered second communication terminal IP-T; IP-MS fully replaces the subscriber's Mobile Station MS, which for calling parties is virtually attached to the Mobile Telecommunications Network PLMN. Therefore, assuming that the second communication terminal IP-T; IP-MS supports the same services as the Mobile Station MS, the subscriber has reached a peer to peer handover from the Mobile Station MS to the second communication terminal IP-T; IP-MS, which may be a simple wired or wireless/cordless IP- or ISDN telephone or a video terminal equipped with audio devices.

As shown in figure 5 a request of a calling party MS2 to set up a call to the subscriber's Mobile Station MS will lead to a call setup with the extended Mobile Services Switching Center MSCX, since the Home Location Register HLR, upon a request for routing information, will forward the address of the extended Mobile Services Switching Center MSCX to which the second communication terminal IP-T; IP-MS is attached.

Subsequently, the extended Mobile Services Switching Center MSCX or the terminal control unit TCM will complete the setup of the connection to the second communication terminal IP-T; IP-MS.

Means and procedures to setup a call over a packet switching network, e.g. the Internet, are well known and therefore not further detailed. However, a description of the so-called Voice over IP technology can be found in [3] and [7].

As described above and shown in figure 3, an integrated communication terminal U-MS may be provided that is designed to operate according to the standards of the Mobile Telecommunications Network PLMN and according to the standards of another network, preferably a wireless network, such as the standards of a wireless Local Area Network LAN or the Digital European Cordless Telephone (DECT) standard. In this embodiment an internal peer to peer handover would take place from one to another communications module within the integrated communication terminal U-MS.

Further, not only a handover of terminals (or communication modules) but also the seamless handover of active calls, i.e. the change of a connection from the first to the second communications terminal MS, IP-MS or modules, when changing terminals MS, IP-T; IP-MS, is possible. During handover procedures normally both terminals MS, IP-T; IP-MS are attached to Mobile Services Switching Centers MSC, MSCX of the same Mobile Telecommunications Network PLMN. Therefore handover procedures are easy to handle compared to the handover of calls between different networks (see [7], page 40 and figure 14). Further facilitated is the handover due to the fact that both terminals MS, IP-T; IP-MS carry the same identity and virtually appear as a single terminal. In case that subscriber uses the integrated communication terminal U-MS enabled with automated handover, then this terminal is seen from the Mobile Telecommunications Network PLMN and the user as a single unit. Handover procedures in a Mobile Telecommunications Network PLMN are further described in [2], page 230, figure 3.48.

When the extended Mobile Services Switching Center MSCX has been instructed via the local control module IP-CL to attach the second communication terminal IP-T; IP-MS to the Mobile Telecommunications Network PLMN at a time a connection is established to the Mobile Station MS, then the extended Mobile Services Switching Center MSCX will setup a connection to second communication terminal IP-T; IP-MS and inform the active Mobile Services Switching Center MSC that a handover is required. Subsequently an Inter-MSC-Handover will be performed. In order to abbreviate the handover procedures, which are described in [9], page 361, the extended Mobile Services Switching Center MSCX may include a MAP_PREPARE_HANDOVER message already containing a handover number. When the connection has been established between the second communication terminal IP-T; IP-MS and the extended Mobile Services Switching Center MSCX the previously active Mobile Services Switching Center MSC will be informed by a MAP_SEND_END_SIGNAL indication.

Handover procedures, in particular handover procedures in a wireless mobile-IP network are further described in [11], International Publication WO 01/74108 A1, which is herein incorporated by reference in its entirety.

As described above, handover procedures, with or without a pending connection, are preferably automated. The subscriber may define conditions for which he prefers to use the second communication terminal IP-T; IP-MS. Conditions for automatically switching to the second communication terminal IP-T; IP-MS are for example
a) the subscriber uses a integrated communication terminal U-MS that indicates when a connection to the wireless Local Area Network WL-LAN is established, or
b) the subscriber may use a docking station for the Mobile Station MS, that is linked to the local control module IP-CL, indicating that the second mode or the second communication terminal IP-T shall be used whenever the Mobile Station MS is inserted therein.

Whenever the more comfortable second communication terminal IP-T; IP-MS is reachable and active the IP-client IP-CL will automatically perform handover procedures. If the Mobile Station MS is taken out of the docking station or the dual-mode terminal looses contact to the wireless Local Area Network WL-LAN, which will be reported to the IP-client IP-CL the Mobile Station MS will automatically be reattached to the Mobile Telecommunications Network PLMN.

In preferred embodiment attach and detach procedures for both terminals MS, IP-T; IP-MS are therefore controlled by the IP-client IP-CL.

As described in [7] the connection to the second communication terminal may also lead through a tunnel in an IP-network, which further connects the extended Mobile Services Switching Center MSCX to a circuit switched network PSTN/ISDN.

Further the second communication terminal may be a standard telephone terminal SC-T, e.g. an ISDN-terminal, which through a circuit switched network PSTN/ISDN directly connects to the extended Mobile Services Switching Center MSCX. During registration procedures, preferably performed with the described IP-client-server architecture, the centralised control module TCM would register the address number of the standard telephone terminal SC-T and then would perform a number translation during a call setup.

Since the second communication terminal IP-T; IP-MS or SC-T is correctly registered at the extended Mobile Services Switching Center MSCX, it is preferably enabled to originate calls that are set up through the extended Mobile Services Switching Center MSCX.

A billing server BS connected to the extended Mobile Services Switching Center MSCX, which can be used by one or more operators of a Mobile Telecommunications Network PLMN, may therefore charge all incoming or outgoing traffic to the second communication terminal IP-T; IP-MS or SC-T to the account used for the Mobile Station MS of the subscriber.

What has been described above is merely illustrative of the application of the principles of the present invention. Other arrangements can be implemented by those skilled in the art. In particular, the disclosed invention can be implemented with any Mobile Telecommunications Network PLMN and any second communications terminal, independently of the applied standards. In figure 4 and 5 it is shown that the calling party uses a Mobile Station MS. The calling party could of course also use any other terminal, originating the call from this or any other network. The inventive solution may of course also be adapted to future standards of networks as described in [2], chapter 5, pages 367-369.

### REFERENCES

[1] THE COMMUNICATIONS HANDBOOK, CRC PRESS, Boca Raton 1997
[2] B. Walke, Mobilfunknetze und ihre Protokolle, Band 1, B.G. Teubner Verlag, Stuttgart 2000
[3] Sean Christensen, Voice over IP solutions, Part Number 200011-002 06-01, Juniper Networks, Sunnyvale 2001
[4] Douglas E. Comer, INTERNETWORKING with TCP/IP, PRINCIPLES, PROTOCOLS, AND ARCHITECTURES, 4^{th} EDITION, Prentice Hall 2000
[5] US Patent Application No. 2001/0028642 A1
[6] U.S. Patent Application 2002/0093945
[7] International Publication WO 00/28752
[8] Digital cellular telecommunications system (Phase 2); Call Forwarding (CF) supplementary services - Stage 1 (GSM 02.82)
   ETSI European Telecommunication Standard ETS 300 515 (2^{nd} Edition, May 1996)
[9] Digital cellular telecommunications system (Phase 2); Mobile Application Part (MAP) specification (GSM 09.02 version 4.19.1)
   ETSI European Telecommunication Standard ETS 300 599 (December 2000)
[10] U.S. Patent 5,490,201
[11] International Publication WO 01/74108 A1
[12] H. Flügel, et. al., Einsatzgebiete von DECT-Netzen im Zusammenspiel mit Dual-Mode Geräten, ITG-Fachberichte, VDE Verlag, Berlin, June 4, 1997, pages 45-54
[13] WO 97 /42785

## Claims

1. A method for integrated communications in a telecommunications network, which combines a Mobile Telecommunications Network (PLMN) and at least an other, wired packet switching or circuit switched network (PSTN/ISDN, INTERNET), with a subscriber's Mobile Station (MS) designed to operate in the Mobile Telecommunications Network (PLMN) and a second communication terminal (IP-T; IP-MS, SC-T) of the subscriber designed to operate in the other or one of the other networks (PSTN/ISDN, INTERNET), **characterised in, that** a local control module (IP-CL) is provided in the subscriber's Mobile Station (MS) or in the second communication terminal (IP-T; IP-MS, SC-T), that is used by the subscriber and that allows communication via the packet switching network (INTERNET) with a centralised control module (TCM), which is integrated in an extended Mobile Services Switching Center (MSCX) and which is capable of accessing and changing the subscriber's record in the Home Location Register (HLR) in order to register a second communication terminal (IP-T; IP-MS, SC-T) instead of the subscriber's Mobile Station (MS), so that a change from the active or inactive Mobile Station (MS) to the second communication terminal (IP-T; IP-MS, SC-T) can be achieved by
a) establishing a communication link between the local control module (IP-CL) and the centralised control module (TCM) via the packet switching network (INTERNET),
b) requesting the centralised control module (TCM) to register the second communication terminal (IP-T; IP-MS, SC-T) at the Home Location Register (HLR) instead of the subscriber's Mobile Station (MS),
c) the centralised control module (TCM) changing the subscriber's record at the Home Location Register (HLR) in order to register the second communication terminal (IP-T; IP-MS, SC-T), and
d) and setting the second communication terminal (IP-T; IP-MS, SC-T) into the active status within the Mobile Telecommunications Network (PLMN).

2. Method according to claim 1, wherein the centralised control module (TCM) updates the record related to the subscriber's Mobile Station (MS), which is stored in the Home Location Register (HLR), whenever the second communication terminal (IP-T; IP-MS, SC-T) is attached to or detached from Mobile Telecommunications Network (PLMN).

3. Method according to claim 1 or 2, wherein data, required to establish connections for incoming and/or outgoing calls between the extended Mobile Services Switching Center (MSCX) and the second communication terminal (IP-T; IP-MS, SC-T), are stored in a local database (VLRX), preferably in the Visitor Location Register (VLR) assigned to the extended Mobile Services Switching Center (MSCX).

4. Method according to one of the claims 1 to 3, wherein, for incoming and/or outgoing calls, connections to the second communication terminal (IP-T; IP-MS, SC-T) are established over a packet switching or a circuit switched network (Internet, PSTN/ISDN).

5. Method according to one of the claims 1 to 4, wherein all charges resulting from incoming and/or outgoing calls of the second communication terminal (IP-T; IP-MS, SC-T) are billed to the account related to the subscriber's Mobile Station (MS).

6. Method according to one of the claims 1 to 5, wherein the Mobile Station (MS) and the second communication terminal (IP-T; IP-MS, SC-T) are integrated in a single communication terminal (U-MS).

7. Method according to one of the claims 1 to 6, wherein the subscriber's Mobile Station MS is switched off in order to get detached from the Mobile Telecommunications Network (PLMN) or wherein the Mobile Station (MS) and the second communication terminal (IP-T; IP-MS, SC-T) are attached to and detached from the Mobile Telecommunications Network PLMN) by means of the local control module (IP-CL).

8. Method according to one of the claims 1 to 7, wherein the local control module (IP-CL) automatically performs the handover between the Mobile Station (MS) and the second communication terminal (IP-T; IP-MS, SC-T), whenever the preferred unit can directly or indirectly be attached to the Mobile Telecommunications Network (PLMN).

9. Method according to one of the claims 1 to 8, wherein the Mobile Station (MS) and the second communication terminal (IP-T; IP-MS, SC-T) share the same identity and address number (IMSI, MSISDN).

10. Mobile Services Switching Center (MSCX) operating according to a method as defined in one of the claims 1 to 9.

11. Mobile Services Switching Center (MSCX) according to claim 10, comprising an IP-Interface (IP-IF) with a gateway (IP-GW), a centralised control module (TCM) and a database (VLRX) designed to store data required to establish a connection to the second communication terminal (IP-T; IP-MS, SC-T).

12. Mobile Services Switching Center (MSCX) according to claim 10 or 11, comprising a control unit designed to set up a connection to the second communication terminal (SC-T) that operates in the switched network (PSTN/ISDN).

13. Integrated communication terminal (U-MS) operating according to a method as defined in one of the claims 1 to 9, comprising modules (MS, IP-MS), which correspond to the Mobile Station (MS) and to the second communications terminal (IP-MS).

14. Integrated communication terminal (U-MS) according to claim 13 with an application (IP-CL) that is designed to perform handovers between said modules (MS, IP-MS) automatically.

15. Telecommunications network comprising a Mobile Services Switching Center (MSCX) as defined in claim 10, 11 or 12.

## Patentansprüche

1. Verfahren für die integrierte Kommunikation in einem Telekommunikationsnetzwerk, welches ein Mobilfunknetz (PLMN) und wenigstens ein anderes, drahtgebundenes paketvermittelndes oder leitungsvermittelndes Netzwerk aufweist (PSTN/ISDN, INTERNET), mit dem Mobilendgerät (MS) eines Teilnehmers, das für den Betrieb im Mobilfunknetz (PLMN) ausgelegt ist, und einem zweiten Kommunikationsendgerät (IP-T; IP-MS, SC-T) des Teilnehmers, das für den Betrieb im anderen oder in einem der anderen Netzwerke (PSTN/ISDN, INTERNET) ausgelegt ist, **dadurch gekennzeichnet, dass** ein lokales Steuermodul (IP-CL) im Mobilendgerät (MS) des Teilnehmers oder im zweiten Kommunikationsendgerät (IP-T; IP-MS, SC-T) vorgesehen ist, das vom Teilnehmer verwendet wird und das via das paketvermittelnde Netzwerk (INTERNET) die Kommunikation mit einem zentralisierten Steuermodul (TCM) erlaubt, das in eine erweiterte Mobile Vermittlungszentrale (MSCX) integriert ist und das fähig ist, auf den Datensatz des Teilnehmers in der Heimdatei (HLR) zuzugreifen und diesen zu ändern, um ein zweites Kommunikationsendgerät (IP-T; IP-MS, SC-T) anstelle des Mobilendgeräts (MS) des Teilnehmers zu registrieren, so das ein Wechsel vom aktiven oder inaktiven Mobilendgerät (MS) zum zweiten Kommunikationsendgerät (IP-T; IP-MS, SC-T) erreicht werden kann, indem
a) eine Kommunikationsverbindung zwischen dem lokalen Steuermodul (IP-CL) und dem zentralisierten Steuermodul (TCM) via das paketvermittelnde Netzwerk (INTERNET) erstellt wird,
b) das zentralisierte Steuermodul (TCM) angefragt wird, das zweite Kommunikationsendgerät (IP-T; IP-MS, SC-T) anstelle des Mobilendgeräts (MS) des Teilnehmers in der Heimdatei (HLR) zu registrieren,
c) das zentralisierte Steuermodul (TCM) den Datensatz des Teilnehmers in der Heimdatei (HLR) ändert, um das zweite Kommunikationsendgerät (IP-T; IP-MS, SC-T) zu registrieren, und
d) das zweite Kommunikationsendgerät (IP-T; IP-MS, SC-T) in den aktiven Zustand innerhalb des Mobilfunknetz (PLMN) versetzt wird.

2. Verfahren nach Anspruch 1, **dadurch gekennzeichnet, dass** das zentralisierte Steuermodul (TCM) den in der Heimdatei (HLR) gespeicherten Datensatz, der das Mobilendgerät (MS) des Teilnehmers betrifft, aktualisiert, wann immer das zweite Kommunikationsendgerät (IP-T; IP-MS, SC-T) dem Mobilfunknetz (PLMN) zugefügt oder von diesem entfernt wird.

3. Verfahren nach Anspruch 1 oder 2, **dadurch gekennzeichnet, dass** Daten, die für den Aufbau von Verbindungen für eingehende und/oder ausgehende Anrufe zwischen der erweiterten Mobilen Vermittlungszentrale (MSCX) und dem zweiten Kommunikationsendgerät (IP-T; IP-MS, SC-T) erforderlich sind, in einer lokalen Datenbank (VLRX), vorzugsweise in der Besucherdatei (VLR) gespeichert werden, die der erweiterte Mobilen Vermittlungszentrale (MSCX) zugeordnet ist.

4. Verfahren nach einem der Ansprüche 1 to 3, **dadurch gekennzeichnet, dass**, für eingehende und/oder ausgehende Anrufe, Verbindungen zum zweiten Kommunikationsendgerät (IP-T; IP-MS, SC-T) über ein paketvermittelndes oder leitungsvermittelndes Netzwerk aufgebaut werden (Internet, PSTN/ISDN).

5. Verfahren nach einem der Ansprüche 1 to 4, **dadurch gekennzeichnet, dass** alle Gebühren, die aus eingehenden und/oder ausgehenden Anrufen des zweiten Kommunikationsendgeräts (IP-T; IP-MS, SC-T) resultieren, auf das Konto belastet werden, welches mit dem Mobilendgerät (MS) des Teilnehmers assoziiert ist.

6. Verfahren nach einem der Ansprüche 1 to 5, **dadurch gekennzeichnet, dass** das Mobilendgerät (MS) und das zweite Kommunikationsendgerät (IP-T; IP-MS, SC-T) in einem einzelnen Kommunikationsendgerät (U-MS) integriert sind.

7. Verfahren nach einem der Ansprüche 1 to 6, **dadurch gekennzeichnet, dass** das Mobilendgerät MS des Teilnehmers ausgeschaltet wird, um vom Mobilfunknetz (PLMN) getrennt zu werden oder dass das Mobilendgerät (MS) und das zweite Kommunikationsendgerät (IP-T; IP-MS, SC-T) mittels des lokalen Steuermoduls (IP-CL) mit dem Mobilfunknetz (PLMN) verbunden oder von diesem getrennt werden.

8. Verfahren nach einem der Ansprüche 1 to 7, **dadurch gekennzeichnet, dass** das lokale Steuermodul (IP-CL) die Gesprächsübergabe (Handover) zwischen dem Mobilendgerät (MS) und dem zweiten Kommunikationsendgerät (IP-T; IP-MS, SC-T) automatisch vollzieht, wann immer die bevorzugte Einheit direkt oder indirekt mit dem Mobilfunknetz (PLMN) verbunden werden kann.

9. Verfahren nach einem der Ansprüche 1 to 8, **dadurch gekennzeichnet, dass** das Mobilendgerät (MS) und das zweite Kommunikationsendgerät (IP-T; IP-MS, SC-T) sich dieselbe Identität und Adressnummer(IMSI, MSISDN) teilen.

10. Mobile Vermittlungszentrale (MSCX) funktionierend nach dem Verfahren wie in einem der Ansprüche 1 to 9 definiert.

11. Mobile Vermittlungszentrale (MSCX) nach Anspruch 10, mit einer IP-Schnittstelleneinheit (IP-IF), mit einem Gateway (IP-GW), einem zentralisierten Steuermodul (TCM) und einer Datenbank (VLRX), die zur Speicherung von Daten vorgesehen ist, die für den Aufbau einer Verbindung zum zweiten Kommunikationsendgerät (IP-T; IP-MS, SC-T) benötigt werden.

12. Mobile Vermittlungszentrale (MSCX) nach Anspruch 10 oder 11, mit einer Steuereinheit, die für den Aufbau einer Verbindung zum zweiten Kommunikationsendgerät (SC-T)ausgelegt ist, das im geschalteten Netzwerk (PSTN/ISDN) betrieben wird.

13. Integriertes Kommunikationsendgerät (U-MS) funktionierend nach dem Verfahren wie in einem der Ansprüche 1 bis 9 definiert, mit Modulen (MS, IP-MS), welche zum Mobilendgerät (MS) und zum zweiten Kommunikationsendgerät (IP-MS) korrespondieren.

14. Integriertes Kommunikationsendgerät (U-MS) nach Anspruch 13 mit einer Anwendung (IP-CL), die ausgelegt ist, um Gesprächsübergaben zwischen den genannten Modulen (MS, IP-MS) automatisch durchzuführen.

15. Telekommunikationsnetzwerk mit einer Mobilen Vermittlungszentrale (MSCX) gemäss Anspruch 10, 11 oder 12.

## Revendications

1. Procédé pour l'intégration de communications dans un réseau de télécommunication qui combine un réseau mobile de télécommunication (PLMN) et au moins un autre réseau commuté par paquets ou par circuits (PSTN/ISDN, INTERNET), avec une station mobile d'abonné (MS) conçue pour être opérationnelle dans le réseau mobile de télécommunication (PLMN) et un second terminal de communication (IP-T; IP-MS, SC-T) de l'abonné conçu pour être opérationnel dans l'un ou l'autre des autres réseaux (PSTN/ISDN, INTERNET), **caractérisé en ce qu'**un module local de contrôle (IP-CL) est prévu dans la station mobile (MS) de l'abonné ou dans le second terminal de communication (IP-T; IP-MS, SC-T), qui est utilisé par l'abonné et qui permet de communiquer via le réseau commuté par paquets (INTERNET) avec un module de contrôle centralisé (TCM), qui est intégré à un centre de commutation de services mobiles étendu (MSCX) et qui est en mesure d'accéder aux informations enregistrées de l'abonnés et de les modifier dans le registre des abonnés nominaux (HLR) afin d'enregistrer un second terminal de communication (IP-T; IP-MS, SC-T) remplaçant la station mobile (MS) d'abonné de sorte qu'un passage de la station mobile (MS) active ou inactive au second terminal de communication (IP-T; IP-MS, SC-T) peut être effectué par
a) établissement d'un lien de communication entre le module de contrôle local (IP-CL) et le module de contrôle centralisé (TCM) via le réseau de commutation par paquets (INTERNET),
b) requête auprès du module de contrôle centralisé (TCM) d'enregistrer un second module de communication (IP-T; IP-MS, SC-T) dans le registre des abonnés nominaux (HLR) à la place de la station mobile (MS) de l'abonné,
c) le module de contrôle centralisé (TCM) modifiant les informations enregistrées de l'abonné auprès du registre des abonnés nominaux (HLR) afin d'enregistrer le second terminal de communication (IP-T; IP-MS, SC-T), et
d) le placement du second terminal de communication (IP-T; IP-MS, SC-T) en statut actif au sein du réseau mobile de télécommunication (PLMN).

2. Procédé selon la revendication 1, dans lequel le module de contrôle centralisé (TCM) actualise l'enregistrement relatif à la station mobile (MS) d'abonné (MS), qui est stockée dans le registre des abonnés nominaux (HLR), à chaque fois que le second terminal de communication (IP-T; IP-MS, SC-T) est raccordé ou coupé du réseau mobile de télécommunication (PLMN).

3. Procédé selon la revendication 1 or 2, dans lequel des données requises pour établir les connexions pour les appels entrants et/ou sortants entre le centre de commutation de services mobiles étendu (MSCX) et le second terminal de communication (IP-T; IP-MS, SC-T), sont stockées dans une base de données locale (VLRX), de préférence dans le registre des abonnés visiteurs (VLR) assigné au centre de commutation de services mobiles étendu (MSCX).

4. Procédé selon l'une des revendications 1 à 3, dans lequel pour des appels entrants et/ou sortants, des connexions au second terminal de communication (IP-T; IP-MS, SC-T) sont établies par un réseau commuté par paquet ou par circuit (Internet, PSTN/ISDN).

5. Procédé selon l'une des revendications 1 à 4, dans lequel tous les frais résultant des appels entrants et/ou sortants du second terminal de communication (IP-T; IP-MS, SC-T) sont facturés au compte associé à la station mobile (MS) de l'abonné.

6. Procédé selon l'une des revendications 1 à 5, dans lequel la station mobile (MS) et le second terminal de communication (IP-T; IP-MS, SC-T) sont intégrés dans un terminal unique de communication (U-MS).

7. Procédé selon l'une des revendications 1 à 6, dans lequel la station mobile (MS) de l'abonné est mise hors tension afin d'être coupée du réseau mobile de télécommunication (PLMN) ou dans lequel la station mobile (MS) et le second terminal de communication (IP-T; IP-MS, SC-T) sont connectés ou déconnectés du réseau mobile de télécommunication (PLMN) au moyen du module de contrôle local (IP-CL).

8. Procédé selon l'une des revendications 1 à 7, dans lequel le module de contrôle local (IP-CL) effectue automatiquement le transfert entre la station mobile (MS) et le second terminal de communication (IP-T; IP-MS, SC-T), à chaque fois que l'unité préférée peut être reliée directement ou indirectement au réseau mobile de télécommunication (PLMN).

9. Procédé selon l'une des revendications 1 à 8, dans lequel la station mobile (MS) et le second terminal de communication (IP-T; IP-MS, SC-T) partagent la même identité et le même numéro d'adresse (IMSI, MSISDN).

10. Centre de commutation de services mobiles (MSCX) fonctionnant selon le procédé tel que défini dans l'une des revendications 1 à 9.

11. Centre de commutation de services mobiles (MSCX) selon la revendication 10, comprenant une interface IP (IP-IF) avec une passerelle (IP-GW), un module de contrôle centralisé (TCM) et une base de données (VLRX) destinée à stocker des donnnées nécessaires à l'établissement d'une connexion au second terminal de communication (IP-T; IP-MS, SC-T).

12. Centre de commutation de services mobiles (MSCX) selon la revendication 10 ou 11, comprenant une unité de contrôle destinée à établir une connexion au second terminal de communication (SC-T) qui opère dans le réseau commuté (PSTN/ISDN).

13. Terminal de communication intégré (U-MS) fonctionnant selon un procédé tel que défini dans l'une des revendications 1 à 9, comprenant des modules (MS, IP-MS) qui correspondent à la station mobile (MS) et au second terminal de communication (IP-MS).

14. Terminal de communication intégré (U-MS) selon la revendication 13 avec une application (IP-CL) destinée à effectuer automatiquement les transferts entre lesdits modules (MS, IP-MS).

15. Réseau de télécommunication comprenant un Centre de commutation de services mobiles (MSCX) selon la revendication 10, 11 ou 12.
